Europäisches Patentamt

(19) European Patent Office

Office européen des brevets

(11) Publication number: **0 106 954**
**B1**

(12) **EUROPEAN PATENT SPECIFICATION**

(45) Date of publication of patent specification: **19.11.87**

(21) Application number: **83107704.5**

(22) Date of filing: **04.08.83**

(51) Int. Cl.⁴: **F 16 D 65/22**

(54) Wedge brake cage and roller assembly.

(30) Priority: **27.09.82 US 424710**

(43) Date of publication of application:
**02.05.84 Bulletin 84/18**

(45) Publication of the grant of the patent:
**19.11.87 Bulletin 87/47**

(84) Designated Contracting States:
**BE CH DE FR GB IT LI NL SE**

(56) References cited:
**US-A-3 037 584**
**US-A-3 362 506**
**US-A-3 511 103**
**US-A-4 051 737**

(73) Proprietor: **Rockwell International Corporation**
**600 Grant Street**
**Pittsburgh Pennsylvania 15219 (US)**

(72) Inventor: **Edwards, David J.**
**6963 Ryburn**
**Utica Michigan 48087 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

### Background of the invention

The present invention relates to automotive vehicle brakes and more specifically, to a cage and roller assembly for a wedge actuated brake for heavy duty service on trucks and coaches.

In wedge actuated brakes a pair of brake shoes are moved outwardly into engagement with the friction surface of a surrounding brake drum by forcing a wedge between the inclined inner ends of a pair of axially aligned plungers disposed between the ends of the brake shoes. A pair of rollers are utilzed, with one roller between each inclined cam face of the wedge and the inner end of the adjacent plunger to translate axial movement of the wedge in one direction into outward movement of both plungers with a minimum of friction. The rollers are carried in a retainer or cage and the cage and roller assembly is usually carried by the wedge for movement with the wedge and relative to the wedge. The wedge is mounted in such a manner as to permit it to float slightly with its position between the plungers and the position of the cage and roller assembly when the brake is applied being partly determined by reaction forces exerted on the wedge by the plungers. Examples of such brake mechanisms are illustrated in United States Patent 3,037,584 issued June 5, 1962, to F. T. Cox et al and United States Patent 3,599/62 issued August 17, 1971, to F. T. Cox et al. Such brake mechanisms are manufactured in sizes ranging from 381 mm (15″) to 1067 mm (42″) in diameter with the larger sizes used primarily for off-highway vehicles.

Several cage and roller assemblies have been proposed to accommodate brake actuation and reaction movement of the wedge, cage and rollers. One such cage is shown in Figures 8—10 of the aforementioned Patent No. 3,037,584. In that design, the arbors of the anti-friction rollers are supported in open-ended slots provided to depending legs of a cage or roller carrier with each arbor of each roller supported by a different cage leg. In that assembly, although the rollers can move in the slots, the legs are rigid and roller movement is limited to the length of the slot.

US Patent Nos. 3,326,330; 4,018,313; and 4,051,737; 3,113,466; and 3,317,010 disclose other forms of cage and roller assemblies in which each roller has an arbor mounted in a slot in a different leg of the cage and movement is therefore limited to the length of the guide slots in the cage legs.

US Patent Nos. 3,362,506; 3,511,103 and 3,599,763 disclose cage and roller assemblies in which the cage is formed from spring steel and each roller is mounted to or carried by one leg of the cage. In those assemblies, the roller moves only with the leg and the leg is subject to cyclic fatigue after repeated flexings. US Patent Nos. 3,388,606 and 3,380,559 disclose other forms of cage and roller assemblies in which each roller is supported or carried by a separate leg and moves outwardly only with that leg.

### Summary of the invention

The present invention is a cage and roller assembly for a wedge actuated vehicle brake comprising a cage formed from a single piece of spring stock and having a body portion with a mounting aperture therethrough, a pair of legs depending from said body portion, spaced flange means on each of said legs, a guide slot in each said flange means, two rollers carried by said cage and having arbors at their ends insertable in said guide slots provided in said flange means.

Each of said guide slots is laterally aligned with the guide slot in the opposed flange, and said arbors of each respective roller are slidably and rotatably mounted in said laterally aligned guide slots, whereby each roller may traverse said guide slots and move relative to its respective flanges as indicated in US—A—4,051,737.

According to the invention, said cage and roller assembly is characterized in that said flange means extend substantially normal to said legs, that each said guide slot is elongate in a direction substantially normal to its respective leg, that each leg carries on of said rollers, and that the respective flanges are movable to flex that leg when the arbors abut the guide slot ends to permit greater than guide slot travel in a direction away from the roller carried by the other leg.

The invention and the advantages offered by the invention will become apparent from the following description of the embodiment shown by the accompanying drawings.

### Description of the drawings

In the drawings, wherein like reference numerals refer to like parts:

Figure 1 is a fragmentary side elevation showing a part of a brake assembly incorporating the present invention;

Figure 2 is a section taken along line 2—2 of Figure 1;

Figure 3 is a view, partly in section, of the wedge assembly of Figure 2;

Figure 4 is a side view of the roller cage of Figure 3;

Figures 5 and 6 are respectively plan and end views of the roller cage of Figure 4; and

Figures 7 and 8 are resepctively plan and side views of one of the rollers of Figure 3.

### Description of the preferred embodiment

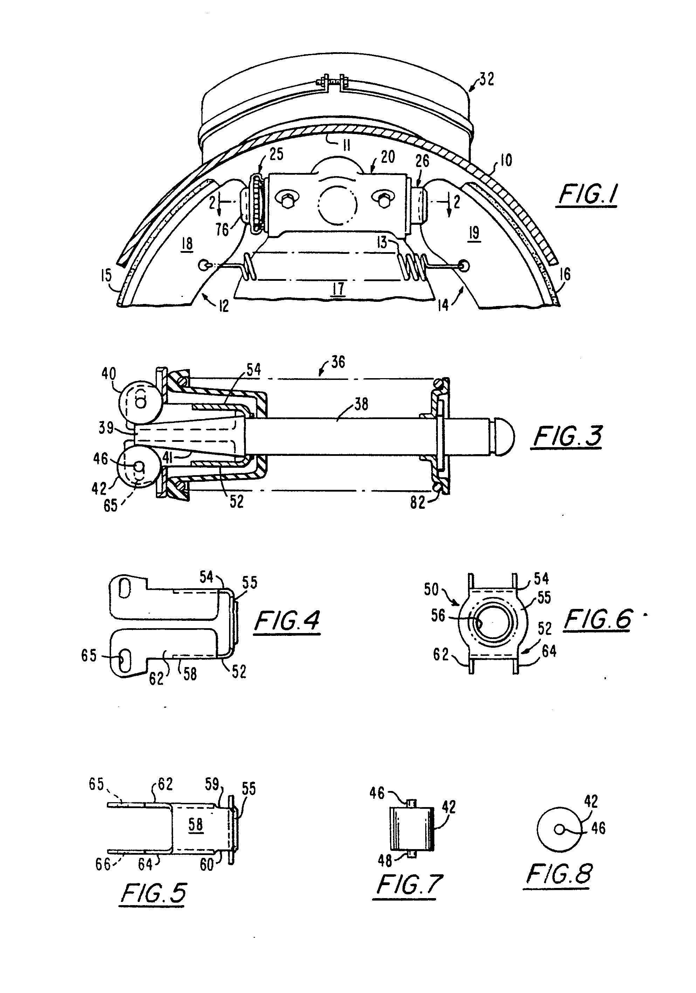

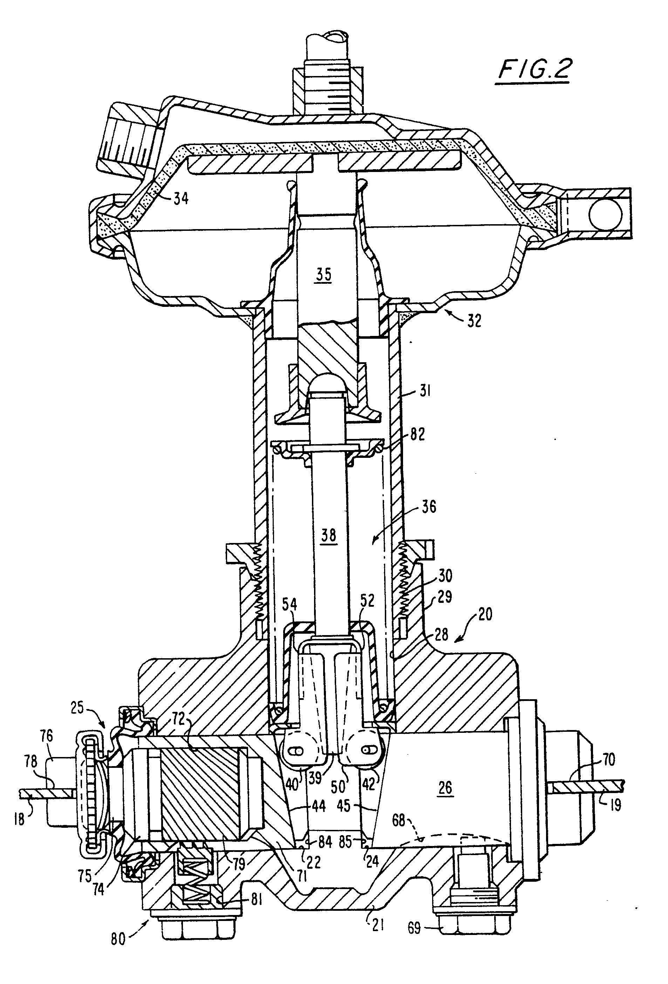

With reference to the drawings, Figure 1 shows a brake assembly comprising a brake drum 10, a pair of brake shoes 12 and 14 and a wedge type brake actuator 20. The brake drum is mounted by conventional means on a ground engaging vehicle wheel (not shown). The actuator 20 is secured by bolts to a support usually referred to as a spider 17 fixed to the vehicle axle beam or housing (not shown). Brake shoes 12 and 14 are supported for movement relative to the spider 17. As shown by Figure 1, the adjacent ends of the webs 18 and 19 of brake shoes 12 and 14 are urged into engagement with the opposite ends of the actuator 20 by means of a return spring 13. In the preferred embodiment, the other ends of the brake shoe webs 18 and 19 are similarly urged into engagement with the opposite ends of another actuator by means of a second return spring as disclosed in United States Patent 3,037,584. The brake shoes 12 and 14 are respectively provided with friction linings 15 and 16 adapted to engage the internal friction surface 11 of brake drum 10 upon outward movement of the brake shoes.

Figure 2 illustrates details of the wedge type actuator 20 which is comprised of a housing 21 formed with opposed similar coaxial cylindrical end bores 22 and 24 which resepctively slidably mount a plunger assembly 25 and a plunger 26 for linear movement therein. One side of housing 21 is provided with an opening 28 coaxial with a hollow boss 29 internally threaded at 30 to mount a tubular support 31 of a fluid motor 32 having a diaphragm 34 and push rod 35 acting on a wedge assembly 36. Push rod 35 seats and acts on the hemi-spherical end of a reciprocating rod 38 carrying a wedge 39 disposed between rollers 40 and 42 located for rolling movement within the grooved inner ends 44 and 45 of the plunger assembly 25 and the plunger 26. The rollers 40 and 42 are loosely supported on reciprocating rod 38 by a roller retainer or cage 50.

The roller cage 50 is preferably formed from a single piece of spring steel sheet stock. With reference to Figures 3—6, the cage 50 is comprised of a pair of legs 52, 54 depending from a mounting or body section 55 having a circular aperture 56 adapted to fit loosely around the reciprocating rod 38. The leg 52 is formed as a flat section 58 extending opposite the cam face 41 of the wedge 39 and includes a spaced pair of flanges 62, 64 with each flange extending substantially normal to the lateral edges 59, 60 of the flat section 58. Flanges 62, 64 are respectively provided with slots 65, 66. The slots 65, 66 are elongate in a direction substantially normal to the plane of flat section 58 and are laterally aligned with each other.

The arbors 46 and 48 of roller 42 are slidably and rotatably received within the slots 65, 66, respectively. The arbors 46 and 48 are about 3,05 mm (.120 inch) in diameter and the slots 65 and 66 are about 3,18 mm (.125 inch) wide by about 6,35 mm (.250 inch/ long, thereby allowing for linear roller arbor displacement of about 3,3 mm (.130 inch) within the guide slots. Although the arbors are free to rotate and move within the slots 65 and 66, the slots guide or restrict movement of the arbors 46 and 48 and thereby retain the roller 42 within the normally required range of movement between the ends of the guide slots 65 and 66.

The depending leg 54 of cage 50 is of identical construction but opposite hand to leg 52 and supports the roller 40 in the same manner.

Plunger 26 has a side slot coacting with the inner end of a cap screw 69 which prevents rotation of the plunger 26 in bore 24. The outer end of plunger 26 is recessed or grooved at 70 to slidably receive the end of the brake shoe web 19.

Plunger assembly 25 is comprised of an outer member or plunger 71 slidable in housing bore 22 and having an internal cylindrical bore 72, slidably and rotatably mounting an inner sleeve 74 sometimes referred to as an adjusting nut. The inner sleeve 74 is formed with an internally threaded bore which receives the threaded shank of an adjusting bolt 75. The outer end of adjusting bolt 75 carries a spring clip 76 having a slot 78 seating the brake show web 18 against the adjusting bolt. The outer periphery of sleeve 74 is formed with a plurality of helical teeth 79.

A spring biased pawl assembly 80 is provided internally of a bore 81 through actuator housing 21. As more fully disclosed in US Patent No. 3,068,964, the pawl assembly 80 engages the helical teeth 79 of sleeve 74 to adjust or extend the length of the plunger assembly 25 and thereby maintain the desired running clearance between the brake shoe friction linings and the brake drum.

The actuator housing and mechanism is so dimensioned that when the system is relaxed as shown in Figure 2, i.e., the brake is not applied, the inner ends of the plunger assembly 25 and the plunger 26 are positively seated against shoulders 84 and 85 at the inner ends of bores 22 and 24, respectively, and the return spring 82 of the wedge assembly 36 retracts the reciprocating rod 38, wedge 39 and roller cage 50 to a position where the rollers 40, 42 are not pressed by the wedge 39 into contact with the grooved inner ends 44, 45 of the plunger assembly 25 and the plunger 26.

When the brakes are applied, the action of the actuator depends to some extent on the direction of rotation of the wheel with which the brake is associated. For present purposes, let it be assumed that the wheel and brake drum 10 is rotating in a counterclockwise direction as shown in Figure 1 and actuators are provided at both ends of each shoe.

When the brakes are applied, push rod 35 moves downwardly and causes the rollers 40 and 42 to be displaced downwardly in rolling contact with the side surfaces of the wedge. As soon as the initial clearance is taken up, the rollers will contact the bottoms of the slots 44 and 45 and continuing movement of the assembly will displace the plunger assembly 25 and the plunger 26 outwardly from their positions as shown. As soon as brake shoe 19 associated with the plunger 26 seats against the friction surface of the drum 10, it is urged back in firm abutment with the acutator housing shoulder 85, displacing the plunger assembly 25 an equal amount to the left.

In the continued downward displacement of the wedge, the rollers move in rolling contact with the side surfaces of the wedge and the bottoms of the respective plunger grooves 44, 45, displacing the plunger assembly 25 to the left as viewed in Figures 1 and 2. The entire assembly comprising the push rod, the wedge, the cage and the rollers is similarly displaced to the left during this movement, this displacement being accommodated by the hemi-spherical connection between the push rod 35 and the reciprocating rod 38.

The rollers 40 and 42 are free to move the length of the guide slots without flexing either leg 52, 54 relative to the body section 55 of the cage 50 and either leg 52, 54 may be flexed in the event either roller may require displacement a distance greater than the length of its respective guide slots due to friction lining wear, lack of adjustment or misalignment of the actuating elements. In such event, the roller arbors move into abutment with the ends of the guide slot and flex the leg relative to the body section of the roller cage. The roller cage 50 thus permits flexing or either leg 52 or 54 whenever actuation of the brake requires displacement of the roller carried by that leg a greater distance than the normal displacement allowed by the length of the guide slots provided to that leg. However, the legs of the roller cage are not required to flex every time the brake is actuated and therefore should provide a longer useful life without substantial cyclic fatigue.

## Claim

A cage and roller assembly for a wedge actuated vehicle brake comprising a cage (50) formed from a single piece of spring stock and having a body portion (55) with a mounting aperture (56) therethrough, a pair of legs (52, 54) depending from said body portion (55), spaced flange means (62, 64) on each of said legs (52, 54), a guide slot (65, 66) in each said flange means (62, 64), two rollers (40, 42) carried by said cage (50) and having arbors (46, 48) at their ends insertable in said guide slots (65, 66) provided in said flange means (62, 64), each of said guide slots (65, 66) being laterally aligned with the guide slot (65, 66) in the opposed flange (62, 64), and said arbors (46, 48) of each respective roller (40, 42) being slidably and rotatably mounted in said laterally aligned guide slots (65, 66), whereby each roller (40, 42) may traverse said guide slots (65, 66) and move relative to its respective flanges (62, 64) characterized in that said flange means (62, 64) extend substantially normal to said legs (52, 54), that each said guide slot (65, 66) is elongate in a direction substantially normal to its respective leg (52, 54), that each leg (52, 54) carries one of said rollers (40, 42), and that the respective flanges (62, 64) are movable to flex that leg (52, 54) when the arbors (46, 48) about the guide slot ends to permit greater than guide slot travel in a direction away from the roller (40, 42) carried by the other leg (52, 54).

## Patentanspruch

Käfig- und Rollenandordnung für eine keilbetätigte Fahrzeugbremse, mit einem Käfig (50), der aus einem einzigen Teil aus Federmaterial gebildet ist und einen Körperabschnitt (55) mit einer durch ihn hindurchführenden Montageöffnung (56) aufweist, zwei Paaren von Schenkeln (52, 54) die von dem Körperabschnitt (55) herabhängen, beabstandeten Flanschmitteln (62, 64) an jedem der Schenkel (52, 54), einem Führungsschlitz (65, 66) in jedem Flanschmittel (62, 64), zwei von dem Käfig (50) getragenen Rollen (40, 42) mit Zapfen (46, 48) an ihren Enden, welche in die Führungsschlitze (65, 66) einsetzbar sind, die in den Flangschmitteln (62, 64) vorgesehen sind, wobei jeder der Führungsschlitze (65, 66) seitlich mit dem Führungsschlitz (65, 66) in dem gegenüberliegenden Flansch (62, 64) ausgefluchtet ist und die Zapfen (46, 48) der jeweils entsprechenden Rolle (40, 42) gleitverschiebbar und drehbar in den seitlich ausgefluchteten Führungsschlitzen (65, 66) gelagert sind, so daß jede Rolle (40, 42) diese Führungsschlitze (65, 66) durchqueren und sich relativ zu den entsprechenden Flanschen (62, 64) bewegen kann, dadurch gekennzeichnet, daß die Flanschmittel (62, 64) sich im wesentlichen senkrecht zu den Schenkeln (52, 54) erstrecken, daß jeder Führungsschlitz (65, 66) in einer Richtung ausgedehnt ist, welche im wesentlichen senkrecht zu dem zugehörigen Schenkel (52, 54) ist, daß jeder Schenkel (52, 54) eine der Rollen (40, 42) trägt und daß die jeweiligen Flansche (62, 64) so bewegbar sind, daß der betreffende Schenkel (52, 54) gebogen wird, wenn die Zapfen (46, 48) an den Führungsschlitzenden anstoßen, um mehr als eine Führungsschlitzbewegung in einer Richtung zu gestatten, die von der Rolle (40, 42) fortweist, welche der andere Schenkel (52, 54) trägt.

## Revendication

Structure de cage et galets desinée à un frein actionné par coin pour véhicule, comprenant une cage (50) formée d'une seule pièce à partir d'un matériau à ressort et ayant une partie formant corps (55) traversée par une ouverture de montage (56), une paire de pattes (52, 54) rattachées à la partie formant corps (55), des moyens du type flasque espacés (62, 64) sur chacune des pattes (52, 54), une fente de guidage (65, 66) dans chacun des moyens du type flasque (62, 64), deux galets (40, 42) portés par la cage (50) et ayant à leurs extrémités des arbres (46, 48) engageables dans les fentes de guidage (65, 66) ménagées dans les moyens du type flasque (62, 64), chacune des fentes de guidage (65, 66) étant alignée latéralement avec la fente de guidage (65, 66) du flasque opposé (62, 64), et les axes (46, 48) de chacun des galets respectifs (40, 42) étant montés libres de pivoter et de coulisser dans les fentes de guidage (65, 66) alignées latéralement, de sorte que chaque galet (40, 42) peut aller d'un bout à l'autre des fentes de guidage (65, 66) et se déplacer par rapport à ses flasques respectifs (62, 64), caractérisée en ce que les moyens du type flasque (62, 64) s'étendent sensiblement perpendiculairement aux pattes (52, 54), en ce que chaque fente de guidage (65, 66) est allongée dans une direction sensiblement perpendiculaire à sa patte respctive (52, 54), en ce que chaque patte (52, 54) porte l'un des galets (40, 42), et en ce que les flasques respectifs (62, 64) sont déplaçables pour faire fléchir cette patte (52, 54) lorsque les axes (46, 48) viennent butter sur les extrémités des fentes de guidage, pour permettre un déplacement supérieur à celui permis par la fente de guidage dans une direction opposée au galet (40, 42) porté par l'autre patte (52, 54).

0 106 954

*FIG.1*

*FIG.3*

*FIG.4*

*FIG.6*

*FIG.5*

*FIG.7*

*FIG.8*

1

_FIG.2_